# EUROPEAN PATENT APPLICATION

(11) **EP 2 757 463 A1**
(43) Date of publication of application: **23.07.2014**
(21) Application number: 13187395.2
(22) Date of filing: 04.10.2013
(51) Int. Cl.: G06F 3/12

(54) **Method and apparatus for creating instance of driver of image forming apparatus**

(30) Priority: 16.01.2013 KR 20130005121
(71) Applicant: Samsung Electronics Co., Ltd, Gyeonggi-do 443-742 (KR)
(72) Inventor: You, Chang-nam, Gyeongsan-si (KR)
(74) Representative: Waddington, Richard

(57) **Abstract**

A method of creating an instance of an installed driver of an image forming apparatus, instance creation apparatus, and an image forming system are provided. The method includes displaying print options provided by the image forming apparatus through a user interface, receiving setting information of at least one print option which is set by a user through the user interface among the displayed print options, receiving a user request for creating an instance having the setting information as default through the user interface, and creating the instance of the installed driver of the image forming apparatus in response to the user request.

## Description

### CROSS-REFERENCE TO RELATED APPLICATIONS

This application is related to, and claims priority to, Korean Patent Application No. 10-2013-0005121, filed on January 16, 2013, in the Korean Intellectual Property Office, the disclosure of which is incorporated herein in its entirety by reference.

### BACKGROUND

### 1. Field

Exemplary embodiments of the present invention relate to a method for creating an instance of a driver of an image forming apparatus, and to an apparatus for performing the method.

### 2. Description of the Related Art

An image forming apparatus including a printer, a multi-function peripheral (MFP), etc. can perform at least one function such as printing of print data, copying of a document, scanning of a document, facsimile (fax) transmitting/receiving of transmission data, email transmission, etc. When a document is printed by using an image forming apparatus, a user may set print options for the document and the image forming apparatus prints the document according to set print options.

When predetermined print option setting information is repeatedly used, or use of a particular print option such as a color print option or an advanced print option is restricted, data may be printed using desired print option setting information, without a change of default print setting information, by using an instance set by the predetermined print option setting information. The instance of a driver of an image forming apparatus may be provided in the form of an installation file with respect to the instance that is set by a manufacturer according to predetermined print option setting information at the request of a customer.

### SUMMARY

Additional aspects and/or advantages will be set forth in part in the description which follows and, in part, will be apparent from the description, or may be learned by practice of the invention.

Exemplary embodiments of the present invention provide a method and apparatus for creating an instance of a driver of an image forming apparatus.

An exemplary embodiment of the present invention provides a computer-readable recording medium.

According to the present invention there is provided an apparatus and method as set forth in the appended claims. Other features of the invention will be apparent from the dependent claims, and the description which follows.

According to an aspect of the present invention, a method of creating an instance of an installed driver of an image forming apparatus includes displaying print options provided by the image forming apparatus through a user interface, receiving setting information of at least one print option that is set by a user through the user interface among the displayed print options, receiving a user request for creating an instance having the setting information as default through the user interface, and creating the instance of the installed driver of the image forming apparatus in response to the user request.

According to an aspect of the present invention, there is provided a computer-readable recording medium having recorded thereon a program for executing the above method.

According to an aspect of the present invention, an instance creation apparatus for creating an instance of an installed driver of an image forming apparatus includes a user interface unit for displaying print options provided by the image forming apparatus, receiving setting information of at least one of print option which is set by a user among the displayed print options, and receiving a user request for creating an instance having the setting information as default, a memory for storing the received setting information, and a processor for creating the instance of the installed driver of the image forming apparatus, in response to the user request.

According to an aspect of the present invention, an image forming system includes an image forming apparatus and a host apparatus in which a driver of the image forming apparatus is installed, wherein the host apparatus displays print options provided by the image forming apparatus through a user interface, receives setting information of at least one print option which is set by a user through the user interface among the displayed print options, receives an user request for creating an instance having the setting information as default through the user interface, and creates the instance of the installed driver of the image forming apparatus in response to the user request, and the image forming apparatus, in response to execution of the created instance, prints print data received from the host apparatus according to the setting information of the print option.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates an image forming system according to an embodiment of the present invention;
FIG. 2 illustrates an apparatus for creating an instance of a driver of an image forming apparatus, according to an embodiment of the present invention;
FIG. 3 illustrates a user interface screen for setting print options, according to an embodiment of the present invention;
FIG. 4 illustrates a user interface screen for inputting the name of an instance that is requested to be created, according to an embodiment of the present invention;
FIG. 5 illustrates a user interface screen displaying created instances, according to an embodiment of the present invention;
FIG. 6 illustrates a user interface screen displaying created instances, according to another embodiment of the present invention;
FIG. 7 illustrates a user interface screen for performing printing by using a created instance, according to an embodiment of the present invention;
FIG. 8 illustrates an example of a method for creating an instance about setting information according to a instance creation request by the user in an application programming interface (API) of an operating system (OS), according to an embodiment of the present invention;
FIG. 9 illustrates a user interface screen for setting a right to limit creation of an instance with respect to setting information of at least one print option among print options according to a user, according to an embodiment of the present invention; and
FIG. 10 is a flowchart for explaining a method for creating an instance of a driver of an image forming apparatus in an instance creating apparatus, according to an embodiment of the present invention.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

The attached drawings for illustrating exemplary embodiments of the present invention are referred to in order to provide a sufficient understanding of the present invention, the merits thereof, and the objectives accomplished by an exemplary implementation of the present invention. Hereinafter, the present invention will be described in detail by explaining exemplary embodiments of the invention with reference to the attached drawings. Like reference numerals in the drawings denote like elements.

As used herein, expressions such as "at least one of," when preceding a list of elements, modify the entire list of elements and do not modify the individual elements of the list.

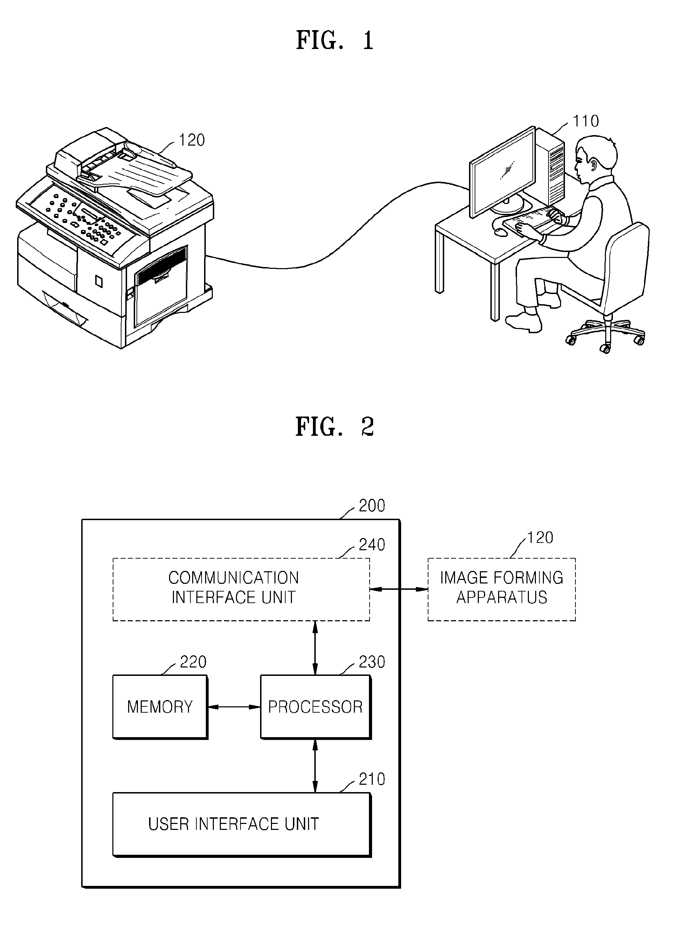

FIG. 1 is a view schematically illustrating an image forming system 100 according to an embodiment of the present invention. Referring to FIG. 1, the image forming system 100 includes a host apparatus 110 and an image forming apparatus 120. Although the image forming system 100 of FIG. 1 is illustrated to include one host apparatus 110 and one image forming apparatus 120 for convenience of explanation, the present invention is not limited thereto and thus a plurality of host apparatuses 110 may be connected to a plurality of image forming apparatuses 120.

According to an exemplary embodiment of the present invention, other elements may be included in addition to the elements illustrated in FIG. 1.

The host apparatus 110 and the image forming apparatus 120 according to an exemplary embodiment may transmit or receive data through wired and/or wireless networks and/or via wired serial communication, by using a communication module provided in each of the host apparatus 110 and the image forming apparatus 120. The networks may include the Internet, a local area network (LAN), a wireless local area network (wireless LAN), a wide area network (WAN), a personal area network (PAN), etc. However, an exemplary embodiment is not limited thereto and a variety of networks capable of transmitting or receiving information may be employed.

The host apparatus 110 according to an exemplary embodiment controls the image forming apparatus 120 and includes apparatuses as, for example, a general computer system, a personal digital assistant (PDA), etc. that may be connected to the image forming apparatus 120 so as to be capable of controlling the image forming apparatus 120. The host apparatus 110 according to an exemplary embodiment includes an instance creation apparatus for creating an instance of a driver of the image forming apparatus 120. The instance creation apparatus is described in detail with reference to FIG. 2.

The image forming apparatus 120, which is an apparatus for forming an image, may include a printer, a facsimile (fax) apparatus, a scanner, a multi-function peripheral (MFP), etc. Accordingly, the image forming apparatus 120 may perform printing, scanning, copying, fax transmission and receiving, email transmission, file transmission to a server, etc. However, an exemplary embodiment is not limited thereto and various services according to a use environment may be further performed.

According to the image forming system 100 of FIG. 1, the host apparatus 110 displays print options provided by the image forming apparatus 120 through a user interface, receives setting information of at least one of the displayed print options set by a user through the user interface, and creates an instance by receiving an instance creation request from the user with respect to the setting information through the user interface. The instance may be displayed with drivers of other image forming apparatuses on a print window. When an instance is selected on the print window, the instance may be executed by referring to the installed driver of the image forming apparatus 120.

When a target document is printed by an application program, the host apparatus 110 selects and executes an instance of desired setting information. Print data converted according to setting information of the instance may be output to the image forming apparatus 120 connected to the host apparatus 110. The image forming apparatus 120 in response to the execution of an instance prints print data received from the host apparatus 110 on a print paper according to the setting information of the instance.

FIG. 2 is a block diagram of an instance creation apparatus 200 for creating an instance of a driver of the image forming apparatus 120, according to an embodiment of the present invention. Referring to FIG. 2, the instance creation apparatus 200 includes a user interface unit 210, a memory 220, and a processor 230. The instance creation apparatus 200 according to an exemplary embodiment may include a communication interface unit 240 that transmits print data prepared by the host apparatus 110 and/or the instance creation apparatus 200 to the image forming apparatus 120.

The instance creation apparatus 200 of FIG. 2 may be included in the host apparatus 110 of FIG. 1. However, an exemplary embodiment is not limited thereto and the instance creation apparatus 200 may be included in the image forming apparatus 120.

The instance creation apparatus 200 may include elements other than the elements illustrated in FIG. 2.

The instance creation apparatus 200 creates an instance of an installed driver of the image forming apparatus 120. Like the driver of the image forming apparatus 120, an instance may be selected on a print window to print data. The instance may not include all pieces of information of the driver of the image forming apparatus 120. Thus, when an instance is executed, it may simultaneously refer to the driver of the image forming apparatus 120.

The user interface unit 210 displays the print options provided by the image forming apparatus 120, receives setting information of at least one of the displayed print options set by a user, and receives an instance creation request by the user with respect to the setting information.

The user interface unit 210 according to an exemplary embodiment may display print options such as color/mono print, paper size, advanced/normal print, single-sided/double-sided print, print concentration adjustment, etc. The instance creation apparatus 200 may display print options referring to a script file defining print options included in driver information of the driver of the image forming apparatus 120. The instance creation apparatus 200 displays print options according to a function provided by the image forming apparatus 120. The print options according to the image forming apparatus 120 are previously defined in the script file of the image forming apparatus 120.

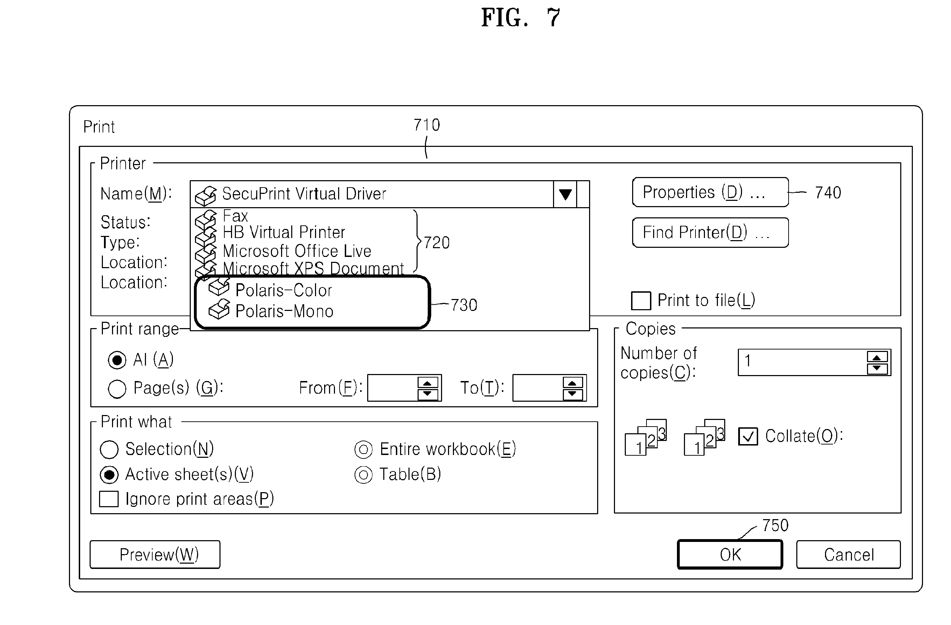

A user may select one print option tab of the print options displayed through the user interface unit 210 and view a screen for inputting setting information with respect to the selected print option. The user may select, through the user interface unit 210, setting information of a print option to be set. A user may select a document to print through the user interface unit 210 and select an instance or the driver of the image forming apparatus 120 on a print window to be used for printing of a selected document. A detailed description thereof is provided with reference to FIG. 7.

The user interface unit 210 may display print options and receive a user's selection of setting information of at least one of the displayed print options set by a user. A detailed description thereof is provided with reference to FIG. 7.

The user interface unit 210 receives an instance creation request from the user with respect to the setting information.

Accordingly, the information input through the user interface unit 210 is output to the processor 230 so as to be stored in the memory 220 or displayed on the user interface unit 210.

According to an exemplary embodiment, the user interface unit 210, in response to the instance creation request, may receive an input of the name of an instance that is requested to be created by a user.

The user interface unit 210 according to an exemplary embodiment may obtain input information from a user and display output information for a user, and may include some or all of input/output devices such as a display panel, a touch screen, a monitor, a mouse, a keyboard, a speaker, etc. and a software module for driving the input/output devices.

The memory 220 stores received setting information. The memory 220 may store driver information of the installed driver of the image forming apparatus 120. The driver information includes default print setting information of the driver of the image forming apparatus 120, the name of the image forming apparatus 120, the name of a driver, and port information of the image forming apparatus 120.

For example, the memory 220 in response to the instance creation request from the user may store the received setting information in the driver information included in the installed driver of the image forming apparatus 120.

According to an exemplary embodiment, the memory 220 in response to the instance creation request by the user may store the received setting information in a Devmode structure in the driver information included in the installed driver. The Devmode structure has default print setting information of the image forming apparatus 120.

The memory 220 may store a right to restrict creation of an instance with respect to some of the print options provided by the image forming apparatus 120 set according to a user.

The memory 220 according to an exemplary embodiment may be implemented using a hard disk drive (HDD), a read only memory (ROM), a random access memory (RAM), a flash memory, a memory card, a solid state drive (SDD), etc.

The processor 230, in response to the instance creation request from the user, creates an instance of the installed driver of the image forming apparatus 120. The processor 230 may create an instance having the setting information as default, by using the driver information included in the installed driver of the image forming apparatus 120. For example, the processor 230 may create an instance having the setting information as default by referring to the setting information included in the driver information.

According to an exemplary embodiment, when the received setting information is stored in the Devmode structure in the driver information included in the installed driver, the processor 230 may create an instance that is installed in a kernel of an operating system (OS) of the instance creation apparatus, based on the Devmode structure.

According to an exemplary embodiment, the processor 230, in response to the instance creation request, may create an instance having a name input by the user.

According to an exemplary embodiment, the processor 230 may set a right, for each user, so as to restrict creation of an instance with respect to some of the print options provided by the image forming apparatus 120. The processor 230 may restrict creation of the instance according to the set right of each user.

The processor 230 controls an overall function of the instance creation apparatus 200. In other words, the processor 230 controls the user interface unit 210, the memory 220, and the communication interface unit 240. Accordingly, the processor 230 controls receiving information through the user interface unit 210 and outputting a result according to input information through the user interface unit 210. The processor 230 controls reading values stored in the memory 220 or storing input information in the memory 220.

The instance creation apparatus 200 according to an exemplary embodiment may include the communication interface unit 240 that transmits print data prepared by the host apparatus 110 or the instance creation apparatus 200 to the image forming apparatus 120. The image forming apparatus 120 receives print data, analyzes the print data, and performs a function to print the print data in the form of text or an image so that the user can see. In other words, the image forming apparatus 120 in response to the execution of a created instance may print the print data according to the setting information of print options.

The communication interface unit 240 transmits and receives data with respect to the image forming apparatus 120 through a network. The network according to an exemplary embodiment includes both a wired network and a wireless network. The network may correspond to the Internet, a local area network (LAN), a wireless local area network (wireless LAN), a wide area network (WAN), etc. However, an exemplary embodiment is not limited thereto and other various types of networks capable of transmitting and receiving information may be employed.

The driver includes at least one program for controlling the image forming apparatus 120. The driver according to an exemplary embodiment is installed in the host apparatus 110 and/or the instance creation apparatus 200 and converts a document prepared by an application program of the host apparatus 110 to print data, so as to print a document prepared by the instance creation apparatus 200 in the image forming apparatus 120.

According to an exemplary embodiment, the driver of the image forming apparatus 120 may be included in the host apparatus 110 or the instance creation apparatus 200, but the present invention is not limited thereto. The driver may provide data needed to create an instance of the driver of the image forming apparatus 120. For example, the driver may provide driver information needed to create an instance, including default print setting information of a driver, the name of the image forming apparatus 120, the name of a driver, port information of the image forming apparatus 120, etc.

Instances of the driver of the image forming apparatus 120 that are simply installed by using a print option setting screen may be created by using instance creation apparatus 200 according to an exemplary embodiment. Since a user can create a plurality of instances having desired setting information without limitation, time and effort required for a user to set print options may be reduced.

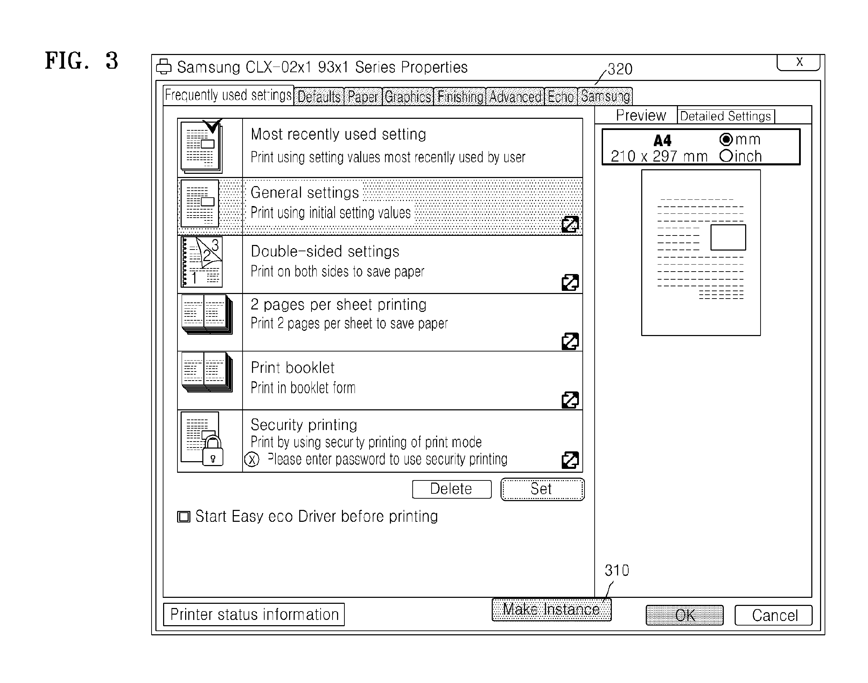

FIG. 3 illustrates a user interface screen for setting print options displayed through the user interface unit 210, according to an embodiment of the present invention. Referring to FIG. 3, the instance creation apparatus 200 displays the print options provided by the image forming apparatus 120 on a user interface screen. Print options such as color/mono print, paper size, advanced/normal print, single-sided/double-sided print, print concentration adjustment, etc. are displayed through the user interface screen of FIG. 3. The print options displayed on the user interface screen of FIG. 3 may correspond to the print options provided by the image forming apparatus 120.

A user sets desired print options of the print options displayed on the user interface screen of FIG. 3 through the user interface unit 210. In other words, the user may select desired print options of the print options displayed on the user interface screen by using a tab 320 and set setting information of the selected print options.

After setting the setting information of the selected print options on the user interface screen, the user requests creation of an instance with respect to the setting information of the selected print options. In FIG. 3, the user may request creation of an instance with respect to the setting information of the selected print options by clicking a button 310 for creating an instance.

The instance creation apparatus 200 receives the instance creation request from the user with respect to the setting information of the selected print options through the user interface unit 210. When the instance creation request is received, the instance creation apparatus 200 transmits the received setting information of the selected print options through the user interface unit 210.

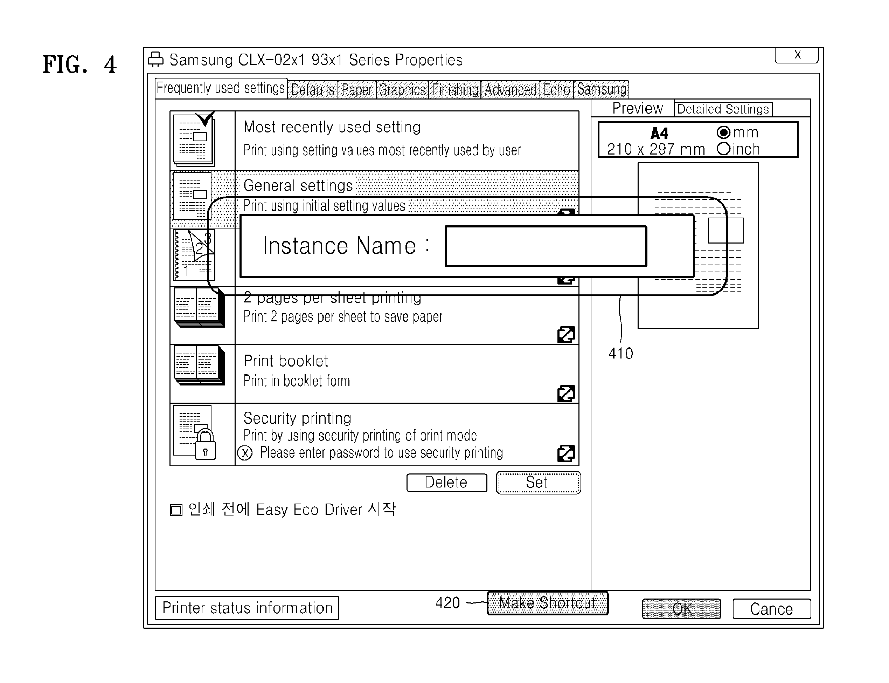

FIG. 4 illustrates a user interface screen for inputting the name of an instance that is requested to be created, through the user interface unit 210 of FIG. 2, according to an embodiment of the present invention. Referring to FIG. 4, the instance creation apparatus 200 in response to the instance creation request by the user displays an input window 410 for inputting the name of an instance that is requested to be created by a user. The user may input the name of an instance referring to the setting information of the set print options through the user interface screen of FIG. 3. For example, when the user sets color print of the displayed print options, the user may input the name of an instance as "Color" in the input window 410. On the other hand, when the user sets mono print, the user may input the name of an instance as "Mono" in the input window 410.

The instance creation apparatus 200 may create a plurality of instances with respect to one image forming apparatus, or a plurality of instances with respect to other image forming apparatuses. Accordingly, the user may display the name of the image forming apparatus 120 together with the created instance to be distinguished from other image forming apparatuses. For example, the user may input names of "Polaris-Color" and "Polaris-Mono" in the input window 410 so as to be distinguished from a color print or mono print of another image forming apparatus.

After inputting the name of an instance for requesting creation of the instance, the user may click the input button 420 on the user interface screen of FIG. 4 to request creation of an instance having the input name. Accordingly, the instance creation apparatus 200 receives the name of the instance input by the user through the user interface unit 210 and creates the instance having the received name.

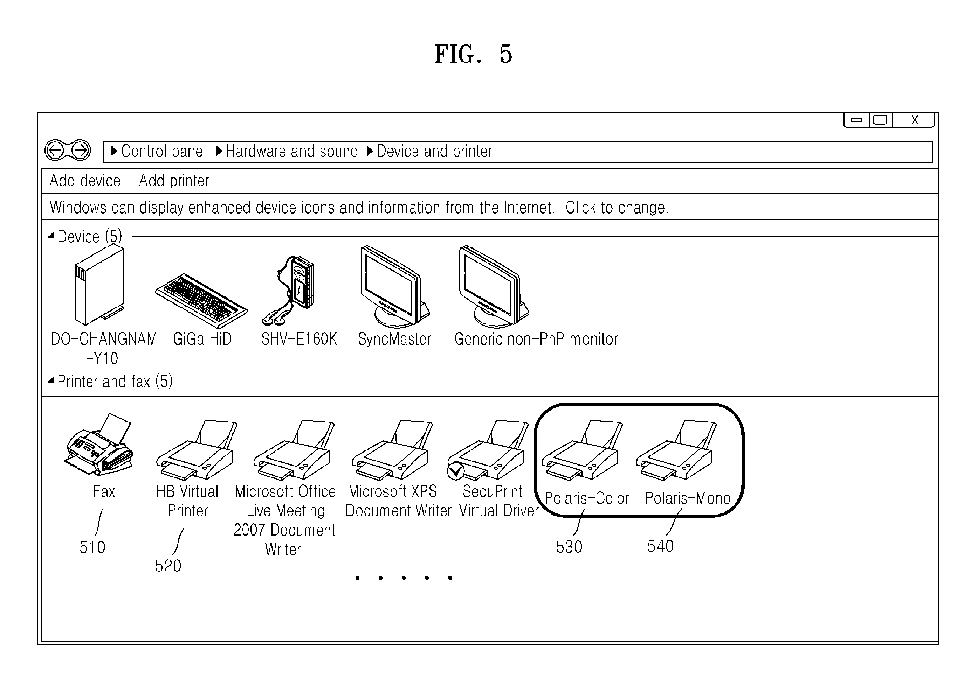

FIG. 5 illustrates a user interface screen displaying instances created according to an embodiment of the present invention. Referring to FIG. 5, the user interface screen displays drivers or instances of the image forming apparatus 120 and other image forming apparatuses installed in the instance creation apparatus 200 or the host apparatus 110. A fax driver 510, a virtual printer driver 520, and instances 530 and 540 created by using the instance creation apparatus 200 according to an exemplary embodiment are shown in the user interface screen. As illustrated in FIG. 5, the instances 530 and 540 created by using the instance creation apparatus 200 are displayed together with a driver of the image forming apparatus 120.

Referring to FIG. 5, a user adds setting information of an instance to the name of the image forming apparatus 120 such as Polaris-Color and Polaris-Mono and thus the instances 530 and 540 may be created so that the image forming apparatus 120 related to the instances 530 and 540 is distinguished from the other image forming apparatuses. A user generates the two instances 530 and 540 of color print and mono print with respect to one driver of the image forming apparatus 120 and thus there is no need to separately set print options for the color print and the mono print. The user may execute each instance according to a print purpose so that printing may be conveniently performed.

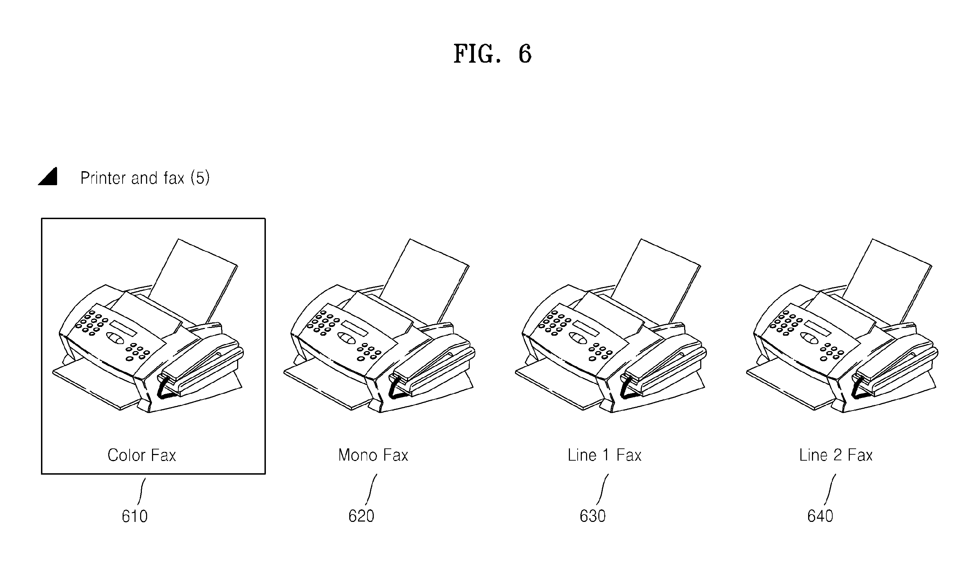

FIG. 6 illustrates a user interface screen displaying instances created according to an exemplary embodiment of the present invention. The user interface screen of FIG. 6 illustrates instances of image forming apparatuses installed in the instance creation apparatus 200 or the host apparatus 110. For example, instances of a facsimile apparatus that is an example of the image forming apparatus 120.

Referring to FIG. 6, instances 610, 620, 630, and 640 may be created with respect to a same fax driver. The instance 610 indicates an instance of setting color print of print options of the fax driver. The instance 620 indicates an instance of setting mono print of the print options of the fax driver. The instance 630 indicates an instance of printing only fax data received through a communication line 1, from among the print options of the fax driver. The instance 640 indicates an instance of printing only fax data received through a communication line 2, from among the print options of the fax driver.

Referring to FIG. 6, a user may create four (4) instances, for example, Color Fax 610, Mono Fax 620, Line 1 Fax 630, and Line 2 Fax 640, by setting respective print options with respect to the same fax driver by using the instance creation apparatus 200 and may then execute the created instances. Accordingly, the user may conveniently perform printing with desired settings for the purpose of printing without separately setting print options.

FIG. 7 illustrates a user interface screen for performing printing by using an instance created according to an embodiment of the present invention. The user interface screen of FIG. 7 is a popup window that appears when a print button is clicked to print a document on an application program.

A window 710 is a window for selecting a driver of the image forming apparatus 120 used when a user prints a document. The window 710 displays all drivers of the image forming apparatus 120 installed on the instance creation apparatus 200 or the host apparatus 110 in the form of a scroll bar. The window 710 displays drivers 720 of the image forming apparatus 120 installed on the instance creation apparatus 200 or the host apparatus 110 and instances 730 created by the instance creation apparatus 200.

As illustrated in FIG. 7, the instances created by the instance creation apparatus 200 are displayed together with the drivers of the image forming apparatus 120 on the window 710 that is a print window for selecting a driver of the image forming apparatus 120. Accordingly, the user may select the instances created by the instance creation apparatus 200 displayed on the print window for selecting a driver of the image forming apparatus 120 in the same manner as one for selecting a driver of the image forming apparatus 120.

The created instances may be executed by being simply selected on the print window for selecting the driver. In other words, the created instances are executed in the same manner as performed for executing the drivers of other image forming apparatuses.

Thus, for the setting information of print options that the user frequently or repeatedly uses, instances of the setting information are previously created by using the instance creation apparatus 200 and an instance having desired setting information is selected among the instances created by the instance creation apparatus 200. Accordingly, the time and effort required to set print options during every printing may be reduced.

On the other hand, when a user tries to use setting information of print options by using a function of setting information of a frequently used print option, instead of using the instances created by the instance creation apparatus 200, the user clicks a properties button 740 and waits for a new user interface screen to pop up so as to search for the setting information.

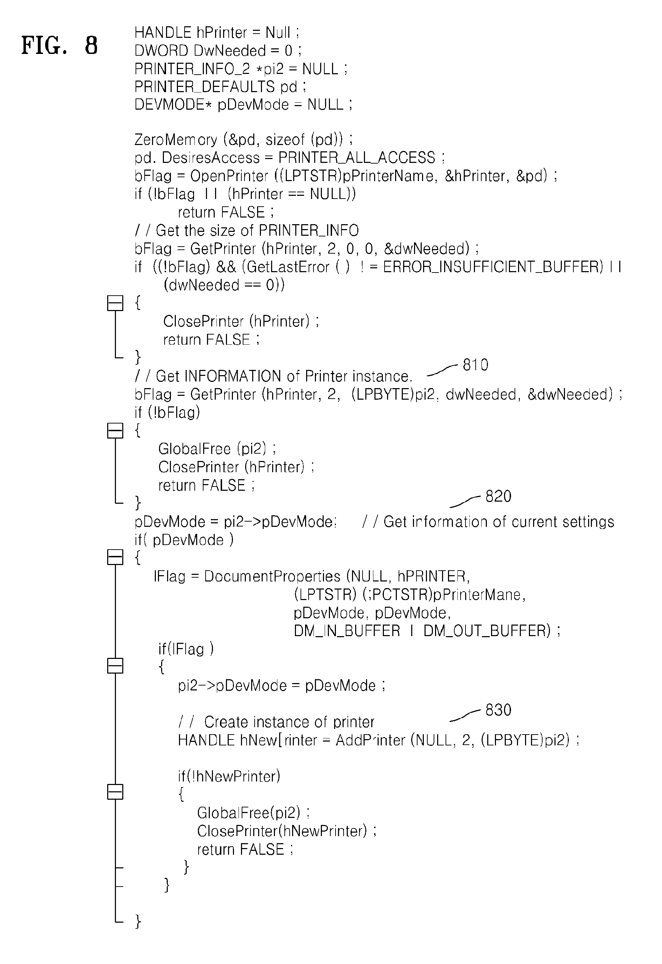

FIG. 8 illustrates an example of a method for creating an instance about setting information according to a user's request to create an instance in an application programming interface (API) of an OS, according to an embodiment of the present invention.

The instance creation apparatus 200, upon a user's request to create an instance, stores the setting information set by a user in the Devmode structure in driver information included in the installed driver of the image forming apparatus 120. The Devmode structure includes default print setting information of the image forming apparatus 120. The Devmode structure has all pieces of information related to the image forming apparatus 120. When the default print setting information of the image forming apparatus 120 is to be changed, the content of the Devmode structure is changed by using an API of an OS and thus the setting of the image forming apparatus 120 is changed according to the changed default print setting information.

When a user's request to create an instance is received, the instance creation apparatus 200 sets a default value corresponding to the setting information set by the user in the Devmode structure. When the user calls a printer function after the default value is stored in the Devmode structure, the driver information to which the default value is applied is read out.

In operation 810, the instance creation apparatus 200 reads out driver information included in the installed driver of the image forming apparatus 120 to create an instance based on the changed Devmode structure. For example, the driver information may be read out by using a command such as GetPrinter. The driver information includes the default print setting information of a driver, the name of the image forming apparatus 120, the name of a driver, and the port information of the image forming apparatus 120.

In operation 820, the instance creation apparatus 200 reads out the Devmode structure included in the driver information. For example, the Devmode structure included in the driver information may be read out by using a command such as DocumentProperties.

In operation 830, the instance creation apparatus 200 creates an instance based on the read Devmode. The created instance is installed in a kernel of an OS of the instance creation apparatus 200 or the host apparatus 110 like the drivers of the image forming apparatuses. Thus, all application programs used by the instance creation apparatus 200 or the host apparatus 110 may perform printing by using the created instance. The OS may manage and operate various application programs installed in the instance creation apparatus 200 and the host apparatus 110 including the instance creation apparatus 200 and provide common services including a graphic user interface. The OS may be installed in the host apparatus 110 or the instance creation apparatus 200.

The commands used in an exemplary embodiment are merely examples of creating an instance by using an API used by the Windows OS. Accordingly, when an instance is created by the instance creation apparatus 200 that uses a different OS, the instance creation apparatus 200 may create the instance according to different commands.

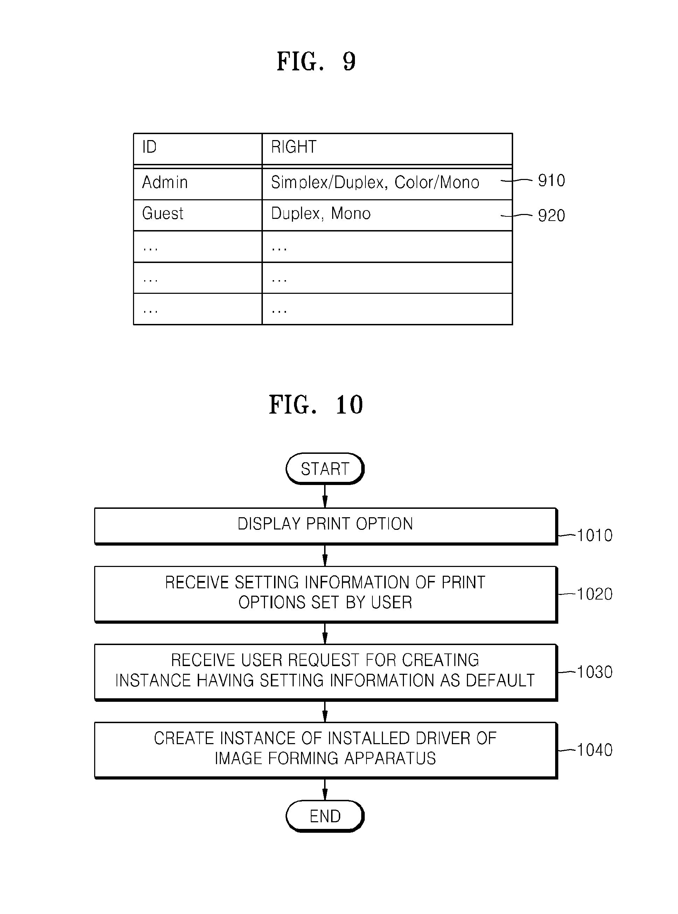

FIG. 9 illustrates a user interface screen for setting a different right for creating an instance according to a user. Thus, for some users, creation of an instance of setting information of some of print options is limited, according to an embodiment of the present invention. Referring to FIG. 9, the instance creation apparatus 200 may set a right, for each user, to limit creation of an instance with respect to setting information of at least one print option among the print options provided by the image forming apparatus 120.

In the user interface screen of FIG. 9, a user with an identification (ID) name of "Admin" is given a right 910 to create instances of single-sided/double-sided print and color/mono print. A user with an ID name of "Guest" is given a right 920 to create instances of double-sided print and mono print only. As illustrated in FIG. 9, an administrator may authorize right for each user to limit creating of an instance with respect to setting information of at least one print option among the print options provided by the image forming apparatus 120.

The instance creation apparatus 200 stores in the memory 220 the rights to create instances with limitations on some of the print options set by the administrator and limits creation of an instance according to the right of a user. Accordingly, when an instance creation request by the user is received but the request includes creation of an instance of a print option that the user is not authorized, the instance creation apparatus 200 referring to the user's instance creation right stored in the memory 220 may prevent creation of an instance regarding the unauthorized print option.

FIG. 10 is a flowchart for explaining a method for creating an instance of a driver of an image forming apparatus in the instance creating apparatus 120, according to an embodiment of the present invention. The flowchart of FIG. 10 includes operations that are time serially processed in the instance creation apparatus 200. Thus, the contents regarding the instance creation apparatus 200, for example, illustrated in FIG. 2 may be applied to the flowchart of FIG. 10.

In operation 1010, the user interface unit 210 displays print options provided by the image forming apparatus 120. In operation 1020, the user interface unit 210 receives setting information of at least one of the displayed print options set by a user. In operation 1030, the user interface unit 210 receives an instance creation request regarding the user's setting information. In operation 1040, the processor 230 creates an instance of the installed driver of the image forming apparatus 120 having the setting information as default.

Accordingly, the instance creation apparatus 200 may conveniently create a plurality of instances having desired setting information according to a user's printing purpose and thus user convenience may be greatly improved.

According to an exemplary embodiment, without having to reinstall a driver or send a request to a manufacturer, a user may conveniently create an instance having setting information of desired print options on a print option setting screen for the installed driver.

When the print option settings of the installed instance are to be changed, or a plurality of instances having different pieces of setting information are to be created, a plurality of instances having desired setting information may be created by using a print option setting screen of an installed driver and thus user convenience may be greatly improved.

An exemplary embodiment of the invention may be embodied as computer readable codes on a computer readable recording medium. The computer readable recording medium is a data storage device that can store data that may be thereafter read by a computer system. Examples of the computer readable recording medium include magnetic storage media such as read-only memory (ROM), floppy disks, hard disks, etc., and optical recording media such as CD-ROMs, digital versatile discs (DVDs), etc.

While this invention has been particularly shown and described with reference to exemplary embodiments thereof, it will be understood by those of ordinary skill in the art that various changes in form and details may be made therein without departing from the spirit and scope of the invention as defined by the appended claims.

Although a few embodiments have been shown and described, it would be appreciated by those skilled in the art that changes may be made in these embodiments without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of creating an instance of an installed driver of an image forming apparatus, the method comprising:
displaying print options provided by the image forming apparatus through a user interface;
receiving setting information of at least one print option that is set by a user through the user interface among the displayed print options;
receiving a user request for creating an instance having the setting information as default through the user interface; and
creating the instance of the installed driver of the image forming apparatus in response to the user request.

2. The method of claim 1, wherein the created instance is displayed together with drivers of other image forming apparatuses on a print window, and when the created instance is selected on the print window, the instance is executed by referring to the installed driver of the image forming apparatus.

3. The method of claim 1, wherein, in the creating of the instance, the instance having the setting information as default is created by using driver information included in the installed driver of the image forming apparatus.

4. The method of claim 1, wherein the creating of the instance comprises:
storing the received setting information in driver information included in the installed driver of the image forming apparatus, in response to the user request, and
creating the instance having the setting information as default, by referring to the setting information included in the driver information.

5. The method of claim 1, further comprising setting a right, for each user, to limit creation of an instance with respect to setting information of at least one print option among print options provided by the image forming apparatus,
wherein the creating of the instance further comprises limiting creation of the instance according to the set right of the user.

6. The method of claim 1, wherein the creating of the instance comprises:
storing the received setting information in a Devmode structure in driver information included in the installed driver, in response to the user request, and
creating the instance in a kernel of an operating system (OS) of a host apparatus, based on the Devmode structure,
wherein the Devmode structure comprises default print setting information of the image forming apparatus.

7. The method of claim 1, wherein the installed driver of the image forming apparatus creates a first instance having first setting information of a print option as default by performing the above method in response to a user request for creating the first instance creation, and a second instance having second setting information of the print option as default by performing the above method in response to a user request for creating the second instance creation.

8. A computer-readable recording medium having recorded thereon a program for executing the method defined in any one of claims 1 through 7.

9. An instance creation apparatus for creating an instance of an installed driver of an image forming apparatus, the instance creation apparatus comprising:
a user interface unit for displaying print options provided by the image forming apparatus, receiving setting information of at least one of print option which is set by a user among the displayed print options, and receiving a user request for creating an instance having the setting information as default;
a memory for storing the received setting information; and
a processor for creating the instance of the installed driver of the image forming apparatus, in response to the user request.

10. The instance creation apparatus of claim 9, wherein the instance is displayed on a print window together with drivers of other image forming apparatuses, and when the created instance is selected on the print window, the instance is executed by referring to the installed driver of the image forming apparatus of the instance.

11. The instance creation apparatus of claim 9, wherein the processor creates the instance having the setting information as default by using driver information of the installed driver of the image forming apparatus, and the driver information is stored in the memory.

12. The instance creation apparatus of claim 9, wherein the memory, in response to the user request, stores the received setting information in driver information included in the installed driver of the image forming apparatus, and the processor creates the instance having the setting information as default, by referring to the setting information included in the driver information.

13. The instance creation apparatus of claim 9, wherein the memory stores a right to limit creation of an instance with respect to setting information of at least one print option among print options provided by the image forming apparatus according to a user, and the processor limits creation of the instance according to the set right of the user.

14. The instance creation apparatus of claim 9, wherein the user interface unit in response to the user request receives a name of the instance input by the user, and the processor creates the instance having the received name.

15. The instance creation apparatus of claim 9, wherein the processor in response to the user request stores the received setting information in a Devmode structure in driver information included in the installed driver, and creates the instance that is installed in a kernel of an operating system (OS) of the instance creation apparatus, based on the Devmode structure,
wherein the Devmode structure comprises default print setting information of the image forming apparatus.
